# EUROPÄISCHE PATENTSCHRIFT

(11) **EP 3 695 147 B1**
(45) Veröffentlichungstag und Bekanntmachung des Hinweises auf die Patenterteilung: **01.09.2021**
(21) Anmeldenummer: 18785286.8
(22) Anmeldetag: 02.10.2018
(51) Int. Cl.: F16K 11/07, F16K 27/04, F15B 13/04

(54) **HYDRAULISCHES SCHIEBERVENTIL**
HYDRAULIC SPOOL VALVE
VANNE HYDRAULIQUE À TIROIR

(30) Priorität: 09.10.2017 DE 102017217924
(43) Veröffentlichungstag der Anmeldung: 19.08.2020
(73) Patentinhaber: Robert Bosch GmbH, 70442 Stuttgart (DE)
(72) Erfinder: SCHOPPEL, Georg, 97816 Lohr (DE); ZEH, Werner, 97904 Dorfprozelten (DE); KROEPER, Alexander, 80335 München (DE)
(86) Internationale Anmeldenummer: PCT/EP2018/076713
(87) Internationale Veröffentlichungsnummer: WO 2019/072622

(56) Entgegenhaltungen:
- DE-A1- 3 436 671
- DE-A1- 3 644 269
- JP-A- 2013 032 846

## Beschreibung

Die Erfindung betrifft ein hydraulisches Schieberventil mit einem Ventilgehäuse, das eine Ventilbohrung mit zwei axial in einem Abstand unmittelbar aufeinander folgenden und über den Durchmesser der Ventilbohrung hinausgehenden Steuerräumen sowie in einer Anschlussfläche eine Pumpenanschlussöffnung, die über einen ersten Fluidkanal mit einem ersten der beiden Steuerräume, und eine Verbraucheranschlussöffnung aufweist, die über einen zweiten Fluidkanal mit einem zweiten der beiden Steuerräume verbunden ist, und mit einem Steuerkolben, der in der Ventilbohrung hin und her bewegbar geführt ist, um die zwei Steuerräume fluidisch miteinander zu verbinden und voneinander zu trennen. In jeden Steuerraum ragt ein in seiner Erstreckung in Umlaufrichtung begrenzter radialer Steg des Ventilgehäuses hinein.

Ein derartiges hydraulisches Schieberventil ist aus der DE 36 44 269 C2 bekannt. Derartige Schieberventile sind vornehmlich als Wegeventile zur Steuerung der Bewegungsrichtung eines hydraulischen Verbrauchers ausgebildet. Die Anschlussöffnungen liegen in einer Anschlussfläche des Ventilgehäuses, wobei für die Lage der Anschlussöffnungen zueinander und zur Ventilbohrung für jede Nenngröße eines Wegeventils ein bestimmtes Lochbild vorgegeben ist. Je nach der Nenngröße eines Wegeventils liegen mehrere oder alle Anschlussöffnungen außerhalb einer senkrecht auf der Anschlussfläche stehenden und durch die Achse der Ventilbohrung gehenden Mittelebene.

Gemäß der DE 36 44 269 C2 ist in einem ringförmigen Steuerraum ein Steg vorgesehen, der radial in den Steuerraum hineinragt. Ein Steg ist insbesondere in den Steuerräumen vorgesehen, die Anschlussöffnungen zugeordnet sind, die außerhalb der besagten Mittelebene liegen und in die ein Fluidkanal tangential mündet. Durch einen Steg in einem Steuerraum soll eine Ringströmung und eine durch diese verursachte Drehbewegung des Steuerkolbens verhindert werden. Eine solche Drehbewegung würde einen erhöhten Verschleiß an Steuerkolben und Gehäuse und erhöhte Leckage mit sich bringen. Die durch eine Ringströmung an sich bedingten Strömungsverluste werden in der DE 36 44 269 nicht näher betrachtet.

Der Erfindung liegt die Aufgabe zugrunde, ein hydraulisches Schieberventil, das wenigstens eine Pumpenanschlussöffnung und wenigstens eine Verbraucheranschlussöffnung aufweist, so auszubilden, dass bei einem Druckfluidfluss von der Pumpenanschlussöffnung zu der Verbraucheranschlussöffnung der Strömungswiderstand für das Druckfluid gering ist.

Diese Aufgabe wird bei einem hydraulisches Schieberventil mit einem Ventilgehäuse, das eine Ventilbohrung mit zwei axial in einem Abstand unmittelbar aufeinander folgenden und über den Durchmesser der Ventilbohrung hinausgehenden Steuerräumen sowie in einer Anschlussfläche eine Pumpenanschlussöffnung, die über einen ersten Fluidkanal mit einem ersten der beiden Steuerräume, und eine Verbraucheranschlussöffnung aufweist, die über einen zweiten Fluidkanal mit einem zweiten der beiden Steuerräume verbunden ist, und mit einem Steuerkolben, der in der Ventilbohrung hin und her bewegbar geführt ist, um die zwei Steuerräume fluidisch miteinander zu verbinden und voneinander zu trennen, wobei in jeden Steuerraum ein in seiner Erstreckung in Umlaufrichtung begrenzter radialer Steg des Ventilgehäuses hineinragt, dadurch gelöst, dass der zweite Steg im zweiten Steuerraum in Umlaufrichtung länger als der erste Steg im ersten Steuerraum ist. Auf diese Weise werden Ringströmungen in den Steuerräumen und damit einhergehende Strömungsverluste besonders wirkungsvoll vermieden. Durch den langen Steg wird die Ausbildung von Ringwirbeln im zweiten Steuerraum behindert und dadurch der Strömungswiderstand für den Druckmittelfluss reduziert.

Um auch den Fall einzuschließen, dass die Tiefe des einen Steuerraums verschieden von der Tiefe des anderen Steuerraums ist, kann man allgemeiner sagen, dass sich der zweite Steg über einen größeren Winkel erstreckt als der erste Steg, wobei der Scheitel des Winkels jeweils auf der Mittelachse der Ventilbohrung liegt.

Es sei hier darauf hingewiesen, dass die Stege auch schon dann wirksam sind, wenn sie nicht bis zum Durchmesser der Ventilbohrung reichen, sondern davon einen Abstand haben und damit zwischen ihnen und einem Kolbenbund am Steuerkolben noch ein Spalt vorhanden ist.

Vorteilhafte Ausgestaltungen eines erfindungsgemäßen hydraulischen Schieberventils kann man den Unteransprüchen entnehmen.

Die einen Steg im Umlaufrichtung begrenzenden Wände liegen bevorzugt nicht in einer Radialebene. Sie verlaufen vielmehr so, dass sich die radial nach innen gewandte Fläche eines Steges über einen kleineren Winkel erstreckt als die radial äußere Fläche, wobei die Scheitel der Winkel auf der Achse der Ventilbohrung liegen.

Der erste Steg hat bevorzugt eine Keilform und die beiden Flanken des Keils in einer Spitze zusammenlaufen.

Üblicherweise werden definierte, gehäuseseitige Steuerkanten am Übergang von einem Steuerraum zur Ventilbohrung durch eine Freidrehung geschaffen ist. Es ist nun von großem Vorteil, wenn die Höhe des in einem Steuerraum mit einer Freidrehung befindlichen Steges so gewählt ist, dass der Steg radial oberhalb der Freidrehung endet. Der Steg wird dann bei der Freidrehung sicher nicht vom für das Freidrehen verwendeten Werkzeug beaufschlagt, so dass das Werkzeug nicht hohen Belastungen ausgesetzt ist und eine qualitativ gute Steuerkante erhalten wird. Es wird ausdrücklich darauf hingewiesen, dass es auch dann von großem Vorteil ist, die Höhe des in einem Steuerraum mit einer Freidrehung befindlichen Steges so zu wählen ist, dass der Steg radial oberhalb der Freidrehung endet, wenn der erste Steg und der zweite Steg in Umlaufrichtung gleich lang sind oder sogar der zweite Steg in Umlaufrichtung kürzer als der erste Steg ist.

Der in Umlaufrichtung kurze Steg wirkt auch einer Drehbewegung des Steuerkolbens entgegen, sofern der erste Fluidkanal den ersten Steuerraum tangential anschneidet, wie dies bei allen Nenngrößen der Wegeventile der Fall ist.

Der erste Steg ist bevorzugt wenigstens annähernd so positioniert, dass eine radial durch ihn hindurch und durch die Achse der Ventilbohrung verlaufende Mittellinie senkrecht auf die Mittelachse des ersten Fluidkanals trifft (90 Grad-Position). Denkbar ist jedoch auch eine solche Position, dass eine radial durch ihn hindurch und durch die Achse der Ventilbohrung verlaufende Mittellinie parallel zur Mittelachse des ersten Fluidkanals trifft (0 Grad-Position) oder jede Position dazwischen.

Der zweite Steg in Umfangsrichtung kann auch durch radial verlaufenden Wände begrenzt sein.

Der zweite Steg erstreckt sich in Umfangsrichtung bevorzugt über einen Winkel von etwa 90 Grad, wobei der Scheitel des Winkels auf der Achse der Ventilbohrung liegt.

Wenn der zweite Fluidkanal etwa radial auf den zweiten Steuerraum trifft, ist der zweite Steg vorteilhafterweise derart angeordnet, dass er dem zweiten Fluidkanal bezüglich der Achse der Ventilbohrung diametral gegenüberliegt.

Ein Ausführungsbeispiel eines erfindungsgemäßen hydraulischen Schieberventils ist in der Zeichnung dargestellt. Anhand dieser Zeichnung wird die Erfindung nun näher erläutert.

Es zeigen
- Figur 1: einen Längsschnitt durch das als 4/3 Wegeventil ausgebildete Ausführungsbeispiel;
- Figur 2: einen Schnitt entlang der Linie II-II aus Figur 1,
- Figur 3: einen Schnitt entlang der Linie III-III aus Figur 1 und
- Figur 4: eine perspektivische Ansicht von Hohlräumen innerhalb eines Wegeventils, das gegenüber dem Ausführungsbeispiel aus den Figuren 1 bis 3 leicht abgeändert ist.

Das gezeigt hydraulische Schieberventil ist ein 4/3-Wegeventil, also ein Wegeventil mit vier Anschlüssen und drei Schaltstellungen. Die vier Anschlüsse sind ein Pumpenanschluss, ein Tankanschluss und zwei Verbraucheranschlüsse, an die zum Beispiel ein doppeltwirkender Hydrozylinder angeschlossen wird.

Das Schieberventil ist elektrohydraulisch vorgesteuert. Es besitzt ein Ventilgehäuse 9, das von einer eine Mittelachse 11 aufweisenden Ventilbohrung 10 durchsetzt ist, in der ein Steuerkolben 12 in zwei entgegengesetzte Richtungen bewegbar ist. Durch zwei Zentrierfedern 13 ist der Steuerkolben 12 in einer Mittelstellung zentriert, in der alle Anschlüsse gegeneinander abgesperrt sind. Ein Vorsteuerkanal 14 führt von einem nicht gezeigten elektromagnetisch betätigbaren Pilotventil zu einem ersten Druckraum 15 vor der einen Stirnseite des Steuerkolbens 12 und ein zweiter Vorsteuerkanal 16 führt vom Pilotventil zu einem zweiten Druckraum 17 vor der anderen Stirnseite des Steuerkolbens 12. Um den Steuerkolben 12 aus der Mittelstellung heraus in eine Arbeitsstellung zu bewegen, in der der Pumpenanschluss mit dem einen Verbraucheranschluss und Tankanschluss mit dem anderen Verbraucheranschluss fluidisch verbunden sind, wird über das Pilotventil der eine Druckraum mit Druck beaufschlagt und der andere Druckraum zum Tank entlastet.

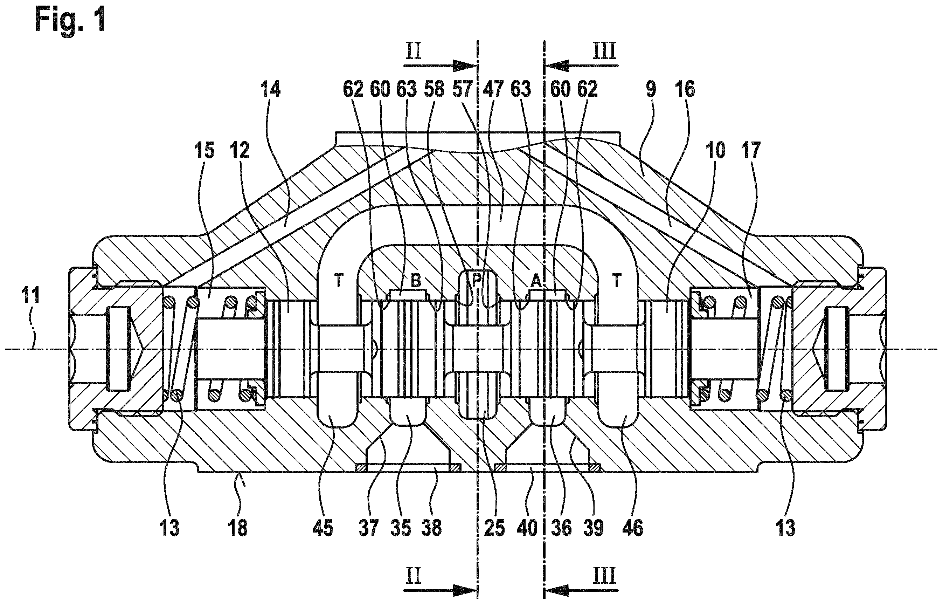

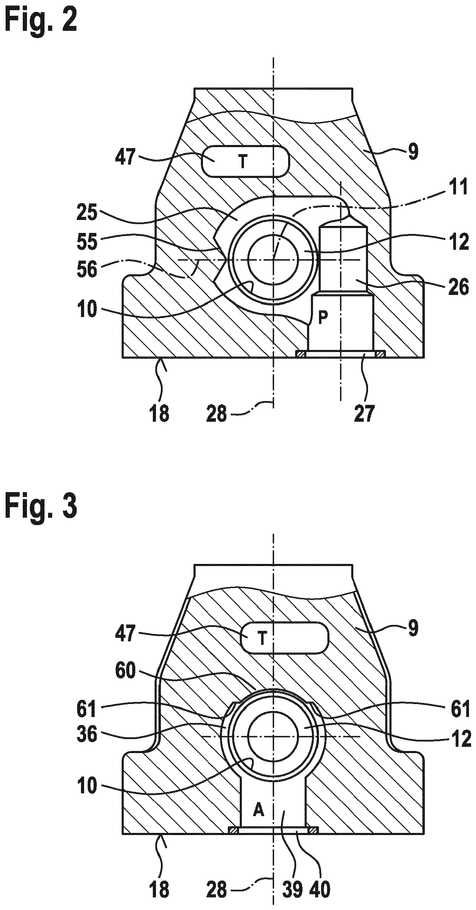

In der Ventilbohrung 11 sind insgesamt fünf ringförmige Steuerräume ausgebildet, die axial voneinander beabstandet aufeinander folgen und über den Durchmesser der Ventilbohrung 9 hinausgehen und die über im Ventilgehäuse verlaufende Fluidkanäle mit in einer Anschlussfläche 18 liegenden Anschlussöffnungen verbunden sind. Der mittlere Steuerraum 25, der außer in Figur 1 auch in dem Schnitt gemäß Figur 2 ersichtlich ist, ist über einen Fluidkanal 26 mit der Pumpenanschlussöffnung 27 fluidisch verbunden. Wie man deutlich aus Figur 2 ersieht, liegt die Pumpenanschlussöffnung nicht in einer senkrecht auf der Anschlussfläche stehenden und durch die Mittelachse 11 der Ventilbohrung 9 gehenden Ebene 28 und der Fluidkanal 26 schneidet den Steuerraum 25 tangential an.

Im Abstand zu dem Steuerraum 25 folgt diesem auf der einen Seite ein Steuerraum 35 und auf der anderen Seite ein Steuerraum 36. Der Steuerraum 35 ist über einen Fluidkanal 37 mit einer Verbraucheranschlussöffnung 38 und der Steuerraum 36 ist über einen Fluidkanal 39 mit einer Verbraucheranschlussöffnung 40 fluidisch verbunden. Die Fluidkanäle 37 und 39 und die Verbraucheranschlussöffnungen 38 und 40 liegen, wie dies aus den Figuren 1 und 3 ersichtlich ist, in der Ebene 28.

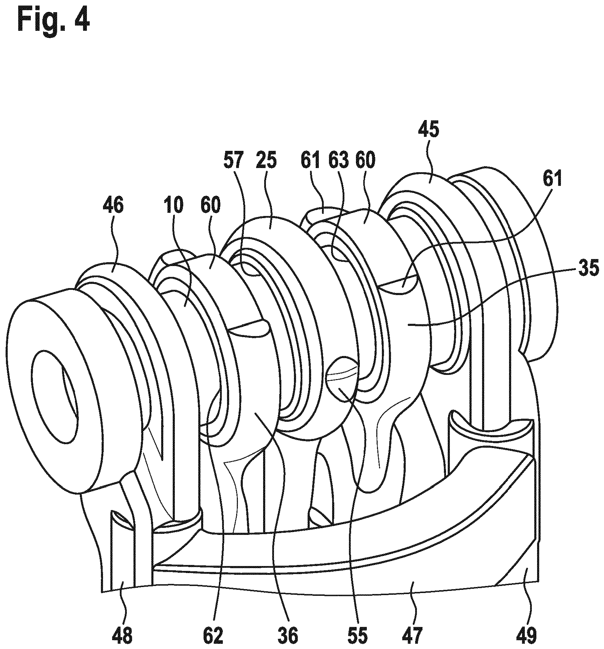

Auf den Steuerraum 35 folgt ein Steuerraum 45 und auf den Steuerraum 36 ein Steuerraum 46. Die beiden Steuerräume 45 und 46 sind über eine im Ventilgehäuse 9 ausgebildete Kanalspange 47 fluidisch miteinander verbunden. Bei der gezeigten Nenngröße eines Wegeventils führt von dem Steuerraum 45 ein Fluidkanal 48 (siehe Figur 4) zu einer ersten Tankanschlussöffnung und von dem Steuerraum 46 ein Fluidkanal 49 zu einer zweiten Tankanschlussöffnung. Von den beiden Tankanschlussöffnungen kann eine für die Verbindung zu einem Tank ausgewählt werden. Die beiden Tankanschlussöffnungen liegen wie die Pumpenanschlussöffnung nicht in der Ebene 28 und die Fluidkanäle 48 und 49 schneiden die Steuerräume 45 und 46 tangential an. Die Pumpenanschlussöffnung 27 liegt auf der einen Seite der Ebene 28, die Tankanschlussöffnungen liegen auf der anderen Seite der Ebene 28.

Um bei einer offenen Verbindung zwischen dem Steuerraum 25 und einem Steuerraum 35 oder 36 einen geringen Strömungswiderstand für das Druckmittel zu haben, sind die Steuerräume 25, 35 und 36 mit Stegen versehen, die einstückig Teil des Ventilgehäuses 9 sind und die radiale Tiefe der Steuerräume verringert. In dem Steuerraum 25 befindet sich ein keilförmiger Steg 55, der in Figur 2 als Erhöhung und in Figur 4 als Ausnehmung ersichtlich ist. An der Spitze und am Fuß ist der Keil jeweils abgerundet. Die beiden Flanken des Stegs sind gleich lang, der Steg 55 bildet also einen gleichschenkligen Keil. Insgesamt erstreckt sich der keilförmige Steg 55 über einen Winkel von etwa 30 Grad, wobei der Scheitel des Winkels auf der Mittelachse 11 liegt. Innerhalb des Steuerraums 25 ist der Steg 55 so positioniert, dass seine Spitze in einer Ebene 56 liegt, die senkrecht auf der Ebene 28 steht und durch die Mittelachse 11 der Ventilbohrung 9 geht.

Am den beiden Übergängen von dem Steuerraum 25 zur Ventilbohrung 9 ist jeweils durch eine Freidrehung eine saubere und definierte gehäuseseitige Steuerkante 57 beziehungsweise 58 geschaffen. Die Höhe des Stegs 55 ist nun so gewählt, dass der Steg radial knapp oberhalb der Freidrehungen endet. Der Steg 55 wird also beim Freidrehen nicht berührt.

In den Steuerräumen 35 und 36 befindet sich jeweils ein Steg 60, der in den Figuren 1 und 3 als Erhöhung und in Figur 4 als Ausnehmung ersichtlich ist. In Umfangsrichtung wird der Steg durch Wände 61 begrenzt, die nicht in einer Radialebene, sondern beide in derselben Tangentialebene liegen. Die radial nach innen gewandte Fläche eines Steges 60 erstreckt sich über einen kleineren Winkel als die radial äußere Fläche, wobei die Scheitel der Winkel auf der Mittelachse 11 der Ventilbohrung liegen. Insgesamt erstreckt sich die radial äußere Fläche des Steges 60 über einen Winkel von etwa 90 Grad. Innerhalb eines Steuerraums 35, 36 ist der Steg 60 so positioniert, dass er symmetrisch beidseits der Ebene 28 liegt.

Auch an beiden Übergängen von dem Steuerraum 35, 36 zur Ventilbohrung 9 ist jeweils durch eine Freidrehung eine saubere und definierte gehäuseseitige Steuerkante 62 beziehungsweise 63 geschaffen. Die Höhe des Stegs 60 ist nun so gewählt, dass der Steg 60 radial knapp oberhalb der Freidrehungen endet. Auch die Stege 60 werden also beim Freidrehen nicht berührt.

Aus den Figuren 1 bis 3 geht hervor, dass beim gezeigten Ausführungsbeispiel die Kanalspange 37 oberhalb und zumindest teilweise seitlich der Ventilbohrung 9 verläuft, wenn man die Anschlussfläche 38 als die Unterseite des Ventilgehäuses ansieht. In Figur 4 verläuft abweichend davon die die beiden Steuerräume 45 und 46 verbindende Kanalspange 37 unterhalb und seitlich der Ventilbohrung 9 und verbindet unmittelbar die beiden zu den Tankanschlussöffnungen führenden Fluidkanäle 48 und 49.

### Bezugszeichenliste

- 9: Ventilgehäuse
- 10: Ventilbohrung
- 11: Mittelachse von 10
- 12: Steuerkolben
- 13: Zentrierfeder
- 14: Vorsteuerkanal
- 15: Druckraum
- 16: Vorsteuerkanal
- 17: Druckraum
- 18: Anschlussfläche
- 25: Steuerraum
- 26: Fluidkanal
- 27: Pumpenanschlussöffnung
- 35: Steuerraum
- 36: Steuerraum
- 37: Fluidkanal
- 38: Verbraucheranschlussöffnung
- 39: Fluidkanal
- 40: Verbraucheranschlussöffnung
- 45: Steuerraum
- 46: Steuerraum
- 47: Kanalspange
- 48: Fluidkanal
- 49: Fluidkanal
- 55: keilförmiger Steg
- 56: Ebene
- 57: Steuerkante
- 58: Steuerkante
- 60: Steg
- 61: Wände von 60
- 62: Steuerkante
- 63: Steuerkante

## Patentansprüche

1. Hydraulisches Schieberventil mit einem Ventilgehäuse (9), das eine Ventilbohrung (10) mit einer Mittelachse (11), mit zwei axial in einem Abstand unmittelbar aufeinander folgenden und über den Durchmesser der Ventilbohrung hinausgehenden Steuerräumen (25, 35; 25, 36) sowie in einer Anschlussfläche (38) eine Pumpenanschlussöffnung (27), die über einen ersten Fluidkanal (26) mit einem ersten Steuerraum (25) der beiden Steuerräume (25, 35; 25, 36), und eine Verbraucheranschlussöffnung (38, 40) aufweist, die über einen zweiten Fluidkanal (37, 39) mit einem zweiten Steuerraum (35, 36) der beiden Steuerräume (25, 35; 25, 36) verbunden ist, und mit einem Steuerkolben (12), der in der Ventilbohrung (9) hin und her bewegbar geführt ist, um die zwei Steuerräume (25, 35; 25, 36) fluidisch miteinander zu verbinden und voneinander zu trennen, wobei in jeden Steuerraum (25, 35, 36) ein in seiner Erstreckung in Umlaufrichtung begrenzter radialer Steg (55, 60) des Ventilgehäuses (9) hineinragt,
**dadurch gekennzeichnet,**
**dass** der zweite Steg (60) im zweiten Steuerraum (35, 36) in Umlaufrichtung länger ist als der erste Steg (55) im ersten Steuerraum (25) .

2. Hydraulisches Schieberventil nach Patentanspruch 1, wobei die einen Steg (55, 60) in Umlaufrichtung begrenzenden Wände (61) nicht in einer Radialebene liegen derart, dass sich die radial nach innen gewandte Fläche eines Steges (55, 60) über einen kleineren Winkel erstreckt als die radial äußere Fläche, wobei die Scheitel der Winkel auf der Mittelachse (11) der Ventilbohrung (9) liegen.

3. Hydraulisches Schieberventil nach Patentanspruch 2, wobei der erste Steg (55) eine Keilform hat.

4. Hydraulisches Schieberventil nach einem vorhergehenden Patentanspruch, wobei an wenigstens einem Übergang von einem Steuerraum (25, 35, 36) zur Ventilbohrung (9) durch eine Freidrehung eine definierte gehäuseseitige Steuerkante (57, 58, 62, 63) geschaffen ist und wobei die Höhe des Stegs (55, 60) ist so gewählt, dass der Steg (55, 60) radial oberhalb der Freidrehung endet.

5. Hydraulisches Schieberventil nach einem vorhergehenden Patentanspruch, wobei der erste Fluidkanal (26) den ersten Steuerraum (25) tangential anschneidet.

6. Hydraulisches Schieberventil nach Patentanspruch 5, wobei der erste Steg (55) wenigstens annähernd so positioniert ist, dass er dem ersten Fluidkanal (26) bezüglich der Ventilbohrung (9) diametral gegenüberliegt.

7. Hydraulisches Schieberventil nach einem vorhergehenden Patentanspruch, wobei der zweite Steg in Umfangsrichtung durch radial verlaufenden Wände begrenzt ist.

8. Hydraulisches Schieberventil nach einem vorhergehenden Patentanspruch, wobei sich der zweite Steg (60) in Umfangsrichtung über einen Winkel von etwa 90 Grad erstreckt, wobei der Scheitel des Winkels auf der Mittelachse (11) der Ventilbohrung (9) liegt.

9. Hydraulisches Schieberventil nach einem vorhergehenden Patentanspruch, wobei der zweite Fluidkanal (37, 38) etwa radial auf den zweiten Steuerraum (35, 36) trifft und wobei der zweite Steg (60) derart angeordnet ist, dass er dem zweiten Fluidkanal (37, 38) bezüglich der Mittelachse (11) der Ventilbohrung (9) diametral gegenüberliegt.

## Claims

1. Hydraulic spool valve, comprising a valve body (9) which has a valve bore (10) having a central axis (11), having two control chambers (25, 35; 25, 36) which directly follow one another axially at a distance from one another and go beyond the diameter of the valve bore and, in a connection face (38), a pump connection port (27) which is connected via a first fluid channel (26) to a first control chamber (25) of the two control chambers (25, 35; 25, 36), and a consumer connection port (38, 40) which is connected via a second fluid channel (37, 39) to a second control chamber (35, 36) of the two control chambers (25, 35; 25, 36), and having a control piston (12) which is guided so as to be movable back and forth in the valve bore (9) in order to fluidically connect the two control chambers (25, 35; 25, 36) to one another and to separate said chambers from one another, a radial web (55, 60) of the valve body (9), the extent of which is limited in the peripheral direction, protruding into each control chamber (25, 35, 36), **characterized in that** the second web (60) in the second control chamber (35, 36) is longer in the peripheral direction than the first web (55) in the first control chamber (25).

2. Hydraulic spool valve according to Claim 1, wherein the walls (61) limiting a web (55, 60) in the peripheral direction are not located in a radial plane in such a way that the radially inward facing face of a web (55, 60) extends over a smaller angle than the radially outer face, wherein the vertices of the angles are located on the central axis (11) of the valve bore (9).

3. Hydraulic spool valve according to Claim 2, wherein the first web (55) is wedge shaped.

4. Hydraulic spool valve according to any of the preceding claims, wherein at at least one transition from a control chamber (25, 35, 36) to the valve bore (9), a defined, body-side control edge (57, 58, 62, 63) is produced by an undercut, and wherein the height of the web (55, 60) is selected in such a way that the web (55, 60) ends radially above the undercut.

5. Hydraulic spool valve according to any of the preceding claims, wherein the first fluid channel (26) tangentially cuts into the first control chamber (25).

6. Hydraulic spool valve according to Claim 5, wherein the first web (55) is positioned at least approximately so that said web is diametrically opposite the first fluid channel (26) with respect to the valve bore (9).

7. Hydraulic spool valve according to any of the preceding claims, wherein the second web is limited in the peripheral direction by radially extending walls.

8. Hydraulic spool valve according to any of the preceding claims, wherein the second web (60) extends in the peripheral direction over an angle of approximately 90 degrees, wherein the vertex of the angle is located on the central axis (11) of the valve bore (9).

9. Hydraulic spool valve according to any of the preceding claims, wherein the second fluid channel (37, 38) meets the second control chamber (35, 36) approximately radially, and wherein the second web (60) is arranged in such a way that said web is diametrically opposite the second fluid channel (37, 38) with respect to the central axis (11) of the valve bore (9).

## Revendications

1. Soupape hydraulique à tiroir pourvue d'un carter de soupape (9), qui présente un alésage de soupape (10) ayant un axe médian (11), muni de deux chambres de commande (25, 35 ; 25, 36) directement successives axialement à distance l'une de l'autre et dépassant au-delà du diamètre de l'alésage de soupape, ainsi que, dans une surface de raccordement (38), une ouverture de raccordement de pompe (27), qui est reliée à une première chambre de commande (25) parmi les deux chambres de commande (25, 35 ; 25, 36) par l'intermédiaire d'un premier canal de fluide (26), et une ouverture de raccordement de consommateur (38, 40), qui est reliée à une deuxième chambre de commande (35, 36) parmi les deux chambres de commande (25, 35 ; 25, 36) par l'intermédiaire d'un deuxième canal de fluide (37, 39), et d'un piston de commande (12), qui est guidé en mouvement de va-et-vient dans l'alésage de soupape (9), afin de relier l'une à l'autre et de séparer l'une de l'autre fluidiquement les deux chambres de commande (25, 35 ; 25, 36), une entretoise radiale (55, 60) du carter de soupape (9), dont l'étendue est délimitée dans la direction périphérique, faisant saillie dans chaque chambre de commande (25, 35, 36),
**caractérisée en ce que**
la deuxième entretoise (60) dans la deuxième chambre de commande (35, 36) est plus longue dans la direction périphérique que la première entretoise (55) dans la première chambre de commande (25).

2. Soupape hydraulique à tiroir selon la revendication 1, dans laquelle les parois (61) délimitant une entretoise (55, 60) dans la direction périphérique ne se situent pas dans un plan radial, de telle sorte que la surface d'une entretoise (55, 60) tournée radialement vers l'intérieur s'étend sur un angle plus petit que la surface radialement extérieure, les sommets des angles se situant sur l'axe médian (11) de l'alésage de soupape (9).

3. Soupape hydraulique à tiroir selon la revendication 2, dans laquelle la première entretoise (55) a une forme de coin.

4. Soupape hydraulique à tiroir selon l'une quelconque des revendications précédentes, dans laquelle un bord de commande défini côté boîtier (57, 58, 62, 63) est créé au niveau d'au moins une transition d'une chambre de commande (25, 35, 36) à l'alésage de soupape (9) par un dégagement, et dans laquelle la hauteur de l'entretoise (55, 60) est choisie de telle sorte que l'entretoise (55, 60) se termine radialement au-dessus du dégagement.

5. Soupape hydraulique à tiroir selon l'une quelconque des revendications précédentes, dans laquelle le premier canal de fluide (26) coupe tangentiellement la première chambre de commande (25).

6. Soupape hydraulique à tiroir selon la revendication 5, dans laquelle la première entretoise (55) est au moins approximativement positionnée de telle sorte qu'elle est diamétralement opposée au premier canal de fluide (26) par rapport à l'alésage de soupape (9).

7. Soupape hydraulique à tiroir selon l'une quelconque des revendications précédentes, dans laquelle la deuxième entretoise est délimitée dans la direction périphérique par des parois s'étendant radialement.

8. Soupape hydraulique à tiroir selon l'une quelconque des revendications précédentes, dans laquelle la deuxième entretoise (60) s'étend dans la direction périphérique à un angle d'environ 90 degrés, le sommet de l'angle se situant sur l'axe médian (11) de l'alésage de soupape (9).

9. Soupape hydraulique à tiroir selon l'une quelconque des revendications précédentes, dans laquelle le deuxième canal de fluide (37, 38) rencontre approximativement radialement la deuxième chambre de commande (35, 36) et dans laquelle la deuxième entretoise (60) est agencée de telle sorte qu'elle est diamétralement opposée au deuxième canal de fluide (37, 38) par rapport à l'axe médian (11) de l'alésage de soupape (9).
